(19) Europäisches Patentamt
European Patent Office
Office européen des brevets

(11) **EP 3 547 664 B1**

(12) **EUROPÄISCHE PATENTSCHRIFT**

(45) Veröffentlichungstag und Bekanntmachung des Hinweises auf die Patenterteilung:
**15.07.2020 Patentblatt 2020/29**

(51) Int Cl.:
***H04N 5/232*** *(2006.01)*

(21) Anmeldenummer: **19163031.8**

(22) Anmeldetag: **15.03.2019**

(54) **VERFAHREN UND SENSOR ZUM ERZEUGEN VON 3D-BILDDATEN**

DEVICE AND SYSTEM FOR CREATING 3D IMAGE DATA

PROCÉDÉ ET CAPTEUR DE GÉNÉRATION DES DONNÉES D'IMAGE TRIDIMENSIONNELLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.03.2018 DE 102018107363**

(43) Veröffentlichungstag der Anmeldung:
**02.10.2019 Patentblatt 2019/40**

(73) Patentinhaber: **SICK AG**
**79183 Waldkirch (DE)**

(72) Erfinder: **Menzel, Christoph**
**79211 Denzlingen (DE)**

(56) Entgegenhaltungen:
- **NAYAR S K ET AL: "Real-time focus range sensor", COMPUTER VISION, 1995. PROCEEDINGS., FIFTH INTERNATIONAL CONFERENCE ON CAMBRIDGE, MA, USA 20-23 JUNE, LOS ALAMITOS, CA, USA,IEEE COMPUT. SOC, US, 20. Juni 1995 (1995-06-20), Seiten 995-1001, XP010146959, DOI: 10.1109/ICCV.1995.466826 ISBN: 978-0-8186-7042-8**
- **SCHECHNER Y Y ET AL: "The optimal axial interval in estimating depth from defocus", COMPUTER VISION, 1999. THE PROCEEDINGS OF THE SEVENTH IEEE INTERNATION AL CONFERENCE ON KERKYRA, GREECE 20-27 SEPT. 1999, LOS ALAMITOS, CA, USA,IEEE COMPUT. SOC, US, Bd. 2, 20. September 1999 (1999-09-20), Seiten 843-848, XP010350487, ISBN: 978-0-7695-0164-2**

**Beschreibung**

Die Erfindung betrifft ein Verfahren zum Erzeugen von 3D-Bilddaten eines Überwachungsbereichs sowie einen entsprechenden Sensor nach dem Oberbegriff von Anspruch 1 beziehungsweise 10.

Es gibt zahlreiche unterschiedliche Verfahren, mit denen 3D-Bilddaten oder Tiefeninformationen erfasst werden können. Dazu zählen die an das menschliche Sehen angelehnte Stereoskopie, Lichtschnittverfahren mit Auswertung der Veränderung eines Lichtmusters durch eine Tiefenkontur und Lichtlaufzeitverfahren, welche die Laufzeit eines eigenen Lichtsignals bis zum Objekt und zurück bestimmen.

Bei dem hier betrachteten Verfahren Depth from Focus (DFF) oder auch Depth from Defocus (DFD) geht es um ein passives Messverfahren, das bisher vornehmlich in der Mikroskopie bekannt ist. Das Verfahren nutzt die Veränderung der Unschärfe eines Bildes bei Änderung der Fokuslage. Konkret werden mehrere Bilder bei unterschiedlichen Fokuslagen aufgenommen, dann wird dazu bei DFF der Kontrast in verschiedenen Bildbereichen bestimmt und der jeweiligen dort erfassten Objektstruktur eine Entfernung zugeordnet, die der Fokuslage mit dem besten Kontrast entspricht. Bei DFD wird mit der Intensität gearbeitet und der Blur beziehungsweise dessen Änderung durch Vergleich von zwei oder mehr Bildern bestimmt.

Ein herkömmliches Anwendungsbeispiel ist ein Autofokus für einen Fotoapparat ohne zusätzlichen Entfernungssensor. Dazu wird der Fokus durchgefahren und beim Bild mit dem höchsten Kontrast angehalten. Praktisch ist ein Überfahren des scharfen Punktes und anschließendes Zurückfahren notwendig, da zuvor das Maximum nicht erkannt würde. Das ist also ein relativ aufwändiges Vorgehen, und außerdem eignet es sich nicht dazu, 3D-Bilddaten aufzunehmen, sondern dient bestimmungsgemäß dem Auffinden einer optimalen Fokuslage für eine nachfolgende Bildaufnahme.

Aus der EP 2 701 380 B1 ist eine Kamera und ein Verfahren zur Aufnahme scharfer Bilder bekannt, bei dem die Fokuslage periodisch durchgefahren wird. Jeweils beim Passieren einer Fokuslage größter Bildschärfe wird eine Aufnahme ausgelöst. Damit wird zwar auf einfache Weise erreicht, dass die Bilder einer Bildserie scharf gestellt sind, aber für die Erfassung von 3D-Bilddaten ist das ebenso ungeeignet wie der zuvor beschriebene Autofokus.

In der US 9 215 357 B2 werden Bilder an verschiedenen Fokuslagen aufgenommen. Zu drei dieser Bilder werden statistische Werte berechnet, um durch Interpolation eine schärfste Fokuslage aufzufinden. Die nicht weiter begründete und rein beispielhaft vorgeschlagene Auswahl der für die Interpolation genutzten Bilder und damit Fokuslagen ist jedoch für eine robuste und optimierte 3D-Bilddatenerfassung nur bedingt geeignet.

In der Arbeit von Nayar, Shree K., Masahiro Watanabe, and Minori Noguchi. "Real-time focus range sensor." IEEE Transactions on Pattern Analysis and Machine Intelligence 18.12 (1996): 1186-1198 werden Entfernungen mittels DFF geschätzt, aber es wird nicht diskutiert, bei welchen Fokuslagen die zugrundeliegenden Bilder aufzunehmen sind.

Die Arbeit Schechner, Yoav Y., and Nahum Kiryati. "The optimal axial interval in estimating depth from defocus." Proceedings of the Seventh IEEE International Conference on Computer Vision. Vol. 2. IEEE, 1999 befasst sich zwar mit geeigneten Fokuslagen bei DFF, gibt aber nur an, dass die Verschiebung für eine stabile Schätzung höchstens so groß sein soll wie der doppelte Tiefenschärfenbereich, für noch bessere Ergebnisse nicht größer als der einfache Tiefenschärfenbereich.

Es ist daher Aufgabe der Erfindung, die Entfernungsschätzung mit einem kontrastbasierten Verfahren zu verbessern.

Diese Aufgabe wird durch ein Verfahren und einen Sensor zum Erzeugen von 3D-Bilddaten eines Überwachungsbereichs nach Anspruch 1 beziehungsweise 10 gelöst. Entsprechend dem gattungsgemäßen auf Kontrast oder Blur basierenden Verfahren wie DFF oder DFD werden mehrfach gewöhnliche, also zweidimensionale Bilder bei jeweils einer von N verschiedenen Fokuslagen aufgenommen. Bei einem passiven Verfahren wird dabei die Fokuslage einer Empfangsoptik variiert. Ebenso ist auch ein aktives Verfahren mit Projizieren eines Beleuchtungsmusters in den Überwachungsbereich vorstellbar, und die verschiedenen Fokuslagen entstehen dann dadurch unterschiedliche Fokuseinstellungen einer Sendeoptik. Beides ist auch miteinander kombinierbar.

Für das jeweilige Bild bei einer Fokuslage wird dann ein Kontrastmaß bestimmt. Das Kontrastmaß ist im Allgemeinen eine Funktion des Ortes innerhalb des Bildes, enthält folglich vorzugsweise einen Kontrastwert je Pixelbereich oder sogar je einzelnem Pixel entsprechend einer gewünschten lateralen Auflösung der 3D-Bilddaten. Hier wird der Begriff Kontrastmaß so weit verstanden, dass auch die Bestimmung eines Blur oder einer Änderung davon und somit ein DFD-Verfahren mit umfasst ist. Für jeden Pixelbereich wird die schärfste Fokuslage ermittelt, in der das Kontrastmaß am höchsten beziehungsweise der Blur am kleinsten ist, und die Entfernung wird als diese schärfste Fokuslage geschätzt.

Die Erfindung geht nun von dem Grundgedanken aus, die Fokuslagen, bei denen zweidimensionale Bilder aufgenommen werden, nichtlinear über die zu erfassende Reichweite zu verteilen. Die optimale Verteilung der Fokuslagen ist gleichmäßig in der Inversen der Fokuslage. Bezeichnet man die Tiefenrichtung mit $z$, so werden die N Fokuslagen also gleichmäßig in $1/z$ verteilt. Die zweidimensionalen Bilder werden demnach gerade nicht bei äquidistant verteilten Fokuslagen aufgenommen, sondern vom Fernbereich zum Nahbereich hin dichter, und zwar invers-linear oder hyperbelartig entsprechend einer antiproportionalen Zuordnung. Auch wenn diese Verteilung optimal ist, werden erfindungsgemäß vorzugsweise auch Verteilungen mit Toleranzen noch als gleichmäßig verteilte Inverse der Fokuslagen aufgefasst. Solche Toleranzen sind schon deshalb gerechtfertigt, weil die Reichweite einer 3D-Bilderfassung nicht abrupt bei einem festen Wert endet, sondern jenseits nur der spezifizierte, verlässliche Bereich endet, und weil auch eine Wahl in der Nähe einer optimalen Verteilung immer noch sehr gute Ergebnisse liefert. Die Erfindung wird in den anhängenden Ansprüchen definiert.

Die Erfindung hat den Vorteil, dass mit den gewählten verschiedenen Fokuslagen eine optimale Auflösung in Tiefenrichtung erreicht wird, sofern kein Vorwissen über die Objektpositionen vorliegt. Andernfalls wäre eine Anpassung an erwartete Objektpositionen überlegen, aber im Allgemeinen geht es darum, eine unbekannte Szene zu erfassen. Das erfindungsgemäße Verfahren ist besonders vorteilhaft für makroskopische Arbeitsbereiche beispielsweise zwischen 10 cm und 10 m, nicht im Bereich der Mikroskopie. Eine Herausforderung bei einem DFF- oder DFD-Verfahren ist die Geschwindigkeit, mit der eine Erfassung von 3D-Bilddaten erfolgen kann, gerade im Umfeld von bewegten Systemen wie autonomen Fahrzeugen oder Transportsystemen, bei Robotern oder bei Roboterarmen. Dazu ist das besonders effiziente erfindungsgemäße Verfahren sehr hilfreich, das bei gegebener Anzahl von Fokuslagen, die als eine Stützstellenanzahl oder ein Samplingraster in z-Richtung aufgefasst werden können, die präziseste Tiefenwertschätzung ermöglicht.

Vorzugsweise wird eine Fokuslage höchsten Kontrasts zwischen den verschiedenen Fokuslagen interpoliert. Eine einfache Auswertung des Kontrastmaßes sucht dasjenige unter den aufgenommenen Bildern heraus, das in dem jeweiligen Pixelbereich den höchsten Kontrast aufweist, und ordnet dem Pixelbereich dann die zugehörige Fokuslage als Entfernung zu. Damit wird die Genauigkeit der Entfernungsbestimmung auf das Raster der Fokuslagen eingeschränkt. Durch Interpolation einer Kontrastkurve in Abhängigkeit von der Entfernung mit Stützstellen an den verschiedenen Fokuslagen lässt sich die Genauigkeit der Entfernungsschätzung deutlich steigern.

Die Interpolation erfolgt vorzugsweise durch Funktionsfit mit einer symmetrischen Kontrastkurve. Eine Möglichkeit der Interpolation ist ein Funktionsfit, der erheblich vereinfacht und auch genauer wird, wenn man Vorwissen über den Verlauf der zu fittenden Funktion besitzt. Das ist aber der Fall, denn durch die optimale Wahl der verschiedenen Fokuslagen ist die abstandsabhängige Kontrastkurve symmetrisiert, was die Klasse der zu fittenden Funktionen deutlich einschränkt. Insbesondere können bei einem Polynomfit die ungeraden Koeffizienten von vornherein auf Null gesetzt werden, weil sie asymmetrische Beiträge liefern würden.

Zumindest einige der zweidimensionalen Bilder werden vorzugsweise gleichzeitig aufgenommen. Insbesondere werden zweidimensionale Bilder sämtlicher N verschiedener Fokuslagen gleichzeitig aufgenommen. Durch parallele Mehrfachaufnahme stehen neue 3D-Bilddaten mit kurzen Ansprechzeiten zur Verfügung. Außerdem werden Bewegungsunschärfen minimiert.

Zumindest einige der verschiedenen Fokuslagen werden bevorzugt durch eine Fokusverstellung der Empfangsoptik und/oder der Sendeoptik eingestellt werden. Dadurch kann dieselbe Optik für mehrere Aufnahmen verwendet werden. Allerdings steigt die Ansprechzeit, da der Bildsensor mehrfach belichtet und ausgelesen und dazwischen die Optik umfokussiert werden muss. Deshalb sollte die Fokusverstellung möglichst schnell sein, um Bewegungsartefakte so gering wie möglich zu halten.

Zumindest einige der zweidimensionalen Bilder werden vorzugsweise durch mehrere Bildsensoren mit jeweils auf unterschiedliche Fokuslage eingestellter Empfangsoptik aufgenommen. Insbesondere sind N Bildsensoren für die N verschiedenen Fokuslagen vorgesehen. Die Verwendung mehrerer Bildsensoren stellt eine Implementierungsmöglichkeit für eine einfache und schnelle parallele Mehrfachaufnahme dar. Die mehreren Bildsensoren bilden ein Kameraarray vorzugsweise im selben Gehäuse. Andere Ausführungsformen für eine Mehrfachaufnahme mit einem Bildsensor, der effektiv mittels mehrerer Farbkanäle mehrere Bilder aufnimmt, werden später noch erläutert. Die Empfangsoptiken sind vorzugsweise Fixfokusoptiken, die fest auf eine der N verschiedenen Fokuslagen eingestellt sind. Es ist aber auch denkbar, mehrere Bildsensoren mit fokusverstellbaren Empfangsoptiken zu kombinieren, um so im Vergleich mit nur einem Bildsensor mit fokusverstellbarer Empfangsoptik mit weniger Aufnahmezeitfenstern und Umfokussierungen auszukommen, um die N Fokuslagen abzudecken.

Zumindest einige der verschiedenen Fokuslagen werden bevorzugt durch mehrere Beleuchtungsmuster mehrerer Beleuchtungseinheiten eingestellt. Wie schon erläutert, können die verschiedenen Fokuslagen auch in einem aktiven Verfahren durch Veränderung eines projizierten Beleuchtungsmusters erreicht werden. Dann gibt es empfangsseitig auch die Möglichkeit, die verschiedenen Beleuchtungsszenarien durch eine Anordnung mehrerer Beleuchtungseinheiten zu erzeugen. Auch sendeseitig kann alternativ oder ergänzend eine Fokusverstellung für die Sendeoptik(en) vorgesehen sein, um noch mehr Fokuslagen einzustellen. Die mehreren Beleuchtungseinheiten können sequentiell oder parallel aktiviert werden. Im letzteren Fall bedarf es dann empfangsseitig einer Auftrennung beispielsweise über Farbkanäle. Auf Empfängerseite wird vorzugsweise eine hyperfokale Empfangsoptik eingesetzt, deren Tiefenschärfenbereich die gesamte Reichweite umfasst. Damit trägt die Empfangsseite nichts zu Unschärfen bei, so dass die Beziehung zwischen Kontrast und sendeseitiger Fokuslage ungestört bleibt. Alternativ kann auch empfangsseitig die Fokuslage variiert werden, die resultierenden Kontrastvariationen sind dann das kumulierte Ergebnis der sende- und empfangsseitigen Unschärfen, und die Auswertung muss entsprechend angepasst werden.

Zumindest einige der zweidimensionalen Bilder werden bevorzugt zugleich von demselben Bildsensor aufgenommen und anhand ihrer Farben getrennt. Das ist die schon angedeutete Farbkanaltrennung am Bildsensor, um mit demselben Bildsensor gleichzeitig mehrere Bilder beispielsweise bei überlagerten Beleuchtungsmustern unterschiedliche Farben und Fokuslagen aufzunehmen. Die Trennung nach Spektren kann sich auf RGB beschränken, vorzugsweise ist aber eine multispektrale Trennung mit beispielsweise 4x4 Wellenlängenbereichen möglich.

Zumindest einige der verschiedenen Fokuslagen werden bevorzugt durch eine chromatische Empfangsoptik erzeugt. In dem optischen Design einer chromatischen Empfangsoptik ist absichtlich ein besonders großer Farbfehler vorgesehen, d.h. die Fokuslage hängt vom Spektrum ab. Damit wird effektiv eine Überlagerung mehrerer Bilder erzeugt, wobei jedes der Bilder je nach Farbe mit unterschiedlicher Fokuslage auf den Bildsensor abgebildet wird. Mit geeigneter Farbkanaltrennung am Bildsensor werden so gleichzeitig mehrere oder sogar alle N der zweidimensionalen Bilder in den verschiedenen Fokuslagen aufgenommen. Anstelle der empfangsseitigen Farbkanaltrennung in dem Bildsensor kann auch eine Beleuchtungseinheit eingesetzt werden, die nacheinander ein Beleuchtungsmuster in verschiedenen Spektren erzeugt. Die Fokuslage des Beleuchtungsmusters kann dabei festgehalten werden, es genügt also eine einfache, fixe Sendeoptik, da die Variation der Fokuslage durch die chromatische Empfangsoptik entsteht.

Der erfindungsgemäße Sensor ist insbesondere eine 3D-Kamera und weist mindestens einen Bildsensor, eine dem Bildsensor zugeordnete Empfangsoptik sowie eine Steuer- und Auswertungseinheit auf. Damit wird wie erläutert mehrfach ein zweidimensionales Bild bei verschiedenen Fokuslagen aufgenommen, zu den Bildern jeweils ein Kontrastmaß ermittelt und eine Entfernung aus der Fokuslage bei einem höchsten Kontrast bestimmt. Entsprechend dem erfindungsgemäßen Verfahren liegen die verschiedenen Fokuslagen entsprechend einer antiproportionalen Zuordnung zur Entfernung verteilt. Für den Sensor und das darin implementierte Verfahren sind insbesondere die schon beschriebenen Ausführungsformen möglich und zeigen entsprechende Vorteile.

Der Sensor weist bevorzugt mehrere Bildsensoren mit auf unterschiedliche Fokuslagen eingestellten Empfangsoptiken auf. Damit umfasst der Sensor ein Kameraarray, vorzugsweise im selben Gehäuse, in dem auch die Steuer- und Auswertungseinheit angeordnet sein kann. Alternativ oder zusätzlich ist eine Fokusverstellung der Empfangsoptiken vorstellbar.

Der Sensor weist bevorzugt mehrere Beleuchtungseinheiten mit jeweils einer auf unterschiedliche Fokuslagen eingestellten Sendeoptik zum Erzeugen eines Beleuchtungsmusters in dem Überwachungsbereich auf. Das ist die sendeseitige Entsprechung zu einem Kameraarray, wobei auch hier alternativ oder zusätzlich eine Fokusverstellung der Sendeoptiken möglich ist.

Die Empfangsoptiken und/oder die Sendeoptiken sind vorzugsweise bis auf die Einstellung der Fokuslage untereinander gleichartig. Insbesondere weisen sie eine untereinander gleiche Apertur auf. Das erleichtert die Herstellung, da nicht verschiedene Optiken designt und hergestellt werden müssen. Die Optiken werden lediglich in unterschiedlichem Abstand zu Bildsensor beziehungsweise Beleuchtungseinheit angeordnet, um eine gewünschte Fokuslage einzustellen. Eine gleiche Apertur ist nur wegen der erfindungsgemäß gewählten Fokuslagen sinnvoll, die in der Inversen der Fokuslage oder in 1/z gleichmäßig angeordnet sind. Ansonsten wären nämlich die Anforderungen an die Aperturen keineswegs identisch, und dem müsste man mit unterschiedlichen Optiken Rechnung tragen.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1      eine schematische Darstellung eines Sensors zur Aufnahme von Bildern in mehreren Fokuslagen mit Hilfe einer fokusverstellbaren Empfangsoptik;

Fig. 2      eine schematische Frontalansicht auf die Empfangsaperturen mehrerer Bildsensoren zur simultanen Aufnahme von Bildern in mehreren Fokuslagen;

Fig. 3      eine Darstellung der Strahlverläufe an einer Empfangsoptik zur Veranschaulichung des Zusammenhangs zwischen Fokuslage, Objektabstand und Kontrast;

Fig. 4      ein beispielhafter Kontrastverlauf in Abhängigkeit von der Fokuslage;

Fig. 5      ein beispielhafter Kontrastverlauf, jedoch in Abhängigkeit von der inversen Fokuslage und symmetrisiert durch gleichmäßige Verteilung bezüglich der Inversen;

Fig. 6      eine schematische Darstellung eines Sensors zur Aufnahme von Bildern bei Projektion eines Beleuchtungsmusters in verschiedenen Fokuslagen; und

Fig. 7a-c      schematische Frontalansichten auf verschiedene Konfigurationen mehrerer Bildsensoren mit unterschiedlichen Beleuchtungseinheiten.

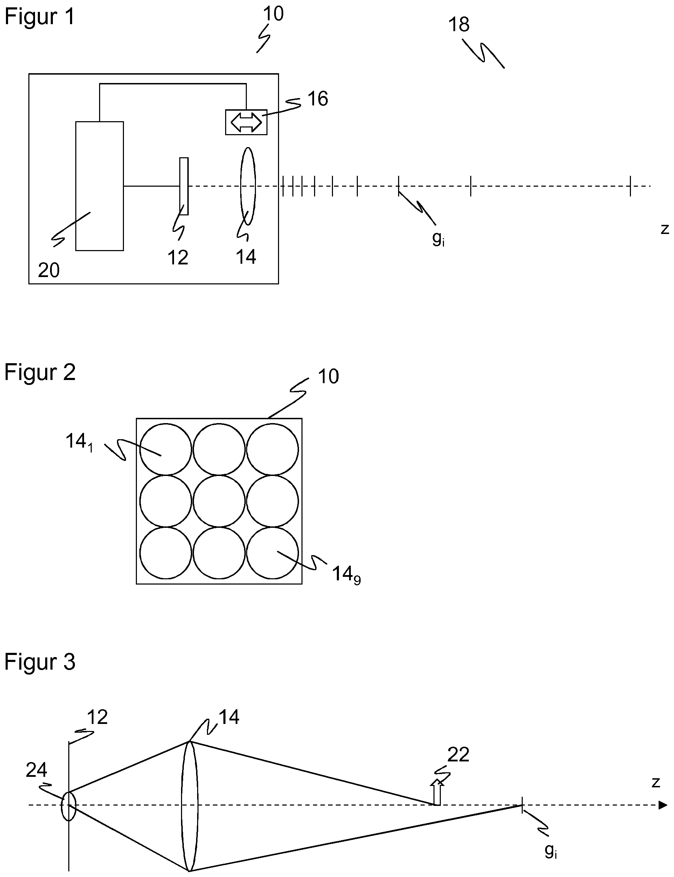

Figur 1 zeigt eine schematische Darstellung eines Sensors 10, beispielsweise einer 3D-Kamera. Der Sensor 10 weist einen Bildsensor 12 auf, der eine Vielzahl von Lichtempfangselementen oder Pixeln umfasst, die zu einer Zeile oder eine Matrix angeordnet sind. Damit werden durch eine vorgeordnete Empfangsoptik 14 mit Fokusverstellung 16 Aufnahmen einer Szenerie in einem Überwachungsbereich 18 erzeugt.

Bildsensor 12 und Fokusverstellung 16 sind mit einer Steuer- und Auswertungseinheit 20 verbunden, welche die Bilddaten ausliest und eine Fokuslage der Empfangsoptik 14 einstellt. Für eine Erfassung von 3D-Bilddaten mit einem Depth-from-Focus-Verfahren (DFF) beziehungsweise einem Depth-from-Defocus-Verfahren (DFD) wird jeweils eine Bildserie mit N Bildern der Szenerie bei unterschiedlichen Fokuslagen $g_i$ , i=1...N der Empfangsoptik 14 aufgenommen. Beispielhafte Fokuslagen $g_i$ sind in Figur 1 durch Striche längs der optischen Achse der Empfangsoptik 14 in der mit z bezeichneten Tiefenrichtung dargestellt. Die vorteilhafte oder sogar optimale Verteilung der Fokuslagen $g_i$ wird später noch unter Bezugnahme auf die Figuren 3 bis 5 ausführlich erläutert.

Die Steuer- und Auswertungseinheit 20 oder alternativ eine externe Rechnereinheit bestimmt nun für jedes Pixel oder jeden Pixelbereich entsprechend der gewünschten lateralen Auflösung der 3D-Bilddaten den Kontrast oder ein damit zusammenhängendes Maß wie den Blur. Jeder Bildbereich ist durch die Aufnahme der Bildserie N-mal aufgenommen, und somit entsteht für jedes Pixel oder jeden Pixelbereich eine Kontrastkurve mit N Stützstellen. Mit entsprechender vorheriger Kalibrierung wird die Lage des Maximums der Kontrastkurve oder ganz analog des Minimums des Blurs in eine Entfernung des Objekts übersetzt. Als Maximum kann in einer einfachen Auswertung diskret der größte Kontrastwert bei einem der $g_i$ bestimmt werden, wobei dann $g_i$ auch unmittelbar den geschätzten Entfernungswert darstellt. Durch geeignete Interpolation kann die Präzision der Entfernungsmessung erhöht werden.

Es ist denkbar, die Bilder der Bildserie vor der Kontrastbestimmung mit verschiedenen Filtern aufzubereiten, ebenso die 3D-Bilddaten abschließend beispielsweise zu glätten. Da die Szenerie sich während der Aufnahme der Bildserie verändert, sollte die Empfangsoptik 14 möglichst schnell umfokussiert werden. Dazu eignet sich eine Fokusverstellung 16 mit Ultraschallmotor oder eine umschaltbare Linse wie eine Flüssiglinse in der Empfangsoptik 14. Dadurch werden Bewegungsartefakte gering gehalten.

Figur 2 zeigt eine schematische Frontalansicht auf die Empfangsoptiken $14_1...14_9$ einer weiteren Ausführungsform des Sensors 10 als Kameraarray. Hinter jeder Empfangsoptik $14_1..14_9$ ist ein Bildsensor 12 vorgesehen, der aufgrund der Perspektive von der zugeordneten Empfangsoptik $14_1...14_9$ verdeckt ist. Die von jeweils einem Bildsensor 12 und einer Empfangsoptik $14_1...14_9$ gebildeten Einzelkameras des Kameraarrays sind vorzugsweise in einem gemeinsamen Gehäuse untergebracht.

Mit einem solchen Kameraarray ist eine parallele Bildaufnahme ohne Verwischung durch Bewegung der Objekte in der Szenerie möglich. Die Empfangsoptiken $14_1..14_9$ unterscheiden sich durch ihre Fokuslagen, d.h. jede Empfangsoptik $14_1...14_9$ weist eine andere Fokuslage $g_i$, i=1..9 auf. Die Empfangsoptiken $14_1..14_9$ haben aber vorzugsweise denselben Sichtbereich, damit eine vergleichbare Bilderserie entsteht, deren Aufnahmen sich nur in der Fokuslage unterscheiden. Alternativ beschränkt sich die Bestimmung von 3D-Bilddaten auf einen gemeinsamen Überlappungsbereich. Zur Reduzierung der Parallaxe zwischen den Bildern sollte der Abstand der Empfangsoptiken $14_1..14_9$ zueinander minimiert werden. Durch chromatisch korrigierte Empfangsoptiken $14_1..14_9$ wird die Genauigkeit der Entfernungsbestimmung erhöht.

Die Anzahl von neun Empfangsoptiken $14_1..14_9$ ist nur ein Beispiel. Ohne zusätzliche Interpolation können auf diese Weise neun Entfernungen unterschieden werden. Durch Interpolation und geeignete Wahl der Fokuslagen $g_i$ lässt sich die Entfernungsauflösung um einen Faktor zwei bis zehn verbessern. Da also die erreichbare Tiefenauflösung direkt mit der Anzahl Empfangsoptiken $14_1..14_9$ korreliert, muss eine Abwägung zwischen Tiefenauflösung und apparativem Aufwand vorgenommen werden. Bis zu 36 und mehr Empfangsoptiken in unterschiedlicher geometrischer Anordnung sind denkbar, aber auch weniger als neun Empfangsoptiken bei entsprechendem Auflösungsverlust. Prinzipiell ist zum Gewinnen zusätzlicher Stützstellen bei weiteren Fokuslagen $g_i$ auch ein Hybrid der Ausführungsformen gemäß Figur 1 und 2 denkbar, also ein Kameraarray, in dem nicht nur Fixfokusoptiken eingesetzt sind, sondern zumindest eine der Empfangsoptiken $14_1..14_9$ zusätzlich eine Fokusverstellung aufweist.

Figur 3 ist eine schematische Darstellung der Strahlverläufe an der Empfangsoptik 14, um den Zusammenhang zwischen Fokuslage, Objektabstand und Kontrast und damit ein DFF- beziehungsweise DFD-Verfahren weiter zu erläutern. Die Empfangsoptik 14 ist auf die Fokuslage $g_i$ eingestellt. Ein Objekt 22 ist in diesem Fall beispielhaft näher als diese Fokuslage $g_i$. Dadurch entsteht auf dem Bildsensor 12 kein scharf abgebildeter Objektpunkt, sondern aufgrund der Defokussierung ein Blur-Kreis 24, der je nach Defokussierung größer wird und hier stellvertretend als Kontrastmaß und damit Messgröße des DFF-Verfahrens herangezogen wird.

Der Blur $\sigma_{defocus}$ des Objekts 22 an einer Position z bei der Fokuslage $g_i$ lässt mit Apertur D der Empfangsoptik 14 und Abstand b zwischen Bildsensor 12 und Empfangsoptik 14 angeben zu

$$\sigma_{defocus}(g_i) = \frac{Db}{2}\left(\frac{1}{z} - \frac{1}{g_i}\right).$$

Durch die Abhängigkeit vom inversen Abstand z ist der Blur $\sigma_{defocus}$ im Nahbereich sehr viel sensitiver als im Fernbereich:

$$\frac{d\sigma_{\text{defocus}}}{dg} \propto \frac{1}{g^2}.$$

Daraus wird erfindungsgemäß der erste Schluss gezogen, die Fokuslagen $g_i$ und damit die Samplingpositionen der Abtastung der Kontrastkurve nichtlinear im Nahbereich dichter zu wählen als im Fernbereich.

Es lässt sich aber sogar eine optimale Wahl für N Fokuslagen $g_i$ angeben, nämlich eine gleichmäßige Verteilung der Inversen der Fokuslagen $g_i$. Bei so festgelegten Samplingpositionen $g_i$ linear über 1/z wird die Blur-Kurve symmetrisiert. Dazu sei 1/z = Z und $1/g_i = G_i$. Aus dem Arbeitsbereich $g_i \in [g_{min}, g_{max}]$ des Sensors 10 wird dann $G_i \in [G_{min}, G_{max}]$, und für den Blur durch Defokussierung gilt mit diesen Variablen

$$\sigma_{\text{defocus}}(G_i) = \frac{Db}{2}(Z - G_i).$$

Deshalb ist $\frac{d\sigma_{\text{defocus}}}{dG} = \text{const}$. Der Verlauf des Blur ist also symmetrisch über G um die unbekannte Objektposition Z. Mit dem Blur ist auch jeder Kontrast symmetrisch, der sich beispielsweise über Kanten des Objekts oder auch über eine noch vorzustellende aktive, strukturierte Beleuchtung ergibt, und damit wird jeder Tiefenwert mittels dieser Wahl von Stützstellen gleichwertig behandelt. Jedes andere Sampling würde bei gleicher Anzahl der N Fokuslagen bestimmte Objektpositionen besser und damit andere notwendigerweise schlechter abtasten. In diesem Sinne ist diese Wahl optimal. Bei Vorkenntnissen oder Annahmen an die Objektpositionen ließen sich besser angepasste Fokuslagen finden, aber das wäre nicht der universelle Ansatz bei Beobachtung einer unbekannten Szenerie.

In 1/z gleichmäßig verteilte Fokuslagen $g_i$ haben überdies den Vorteil, dass mehrere Empfangsoptiken $14_1..14_9$ eines Kameraarrays wie in Figur 2 dieselbe Apertur aufweisen dürfen, somit identische Empfangsoptiken $14_1..14_9$ verwendet werden können und nicht jede Einzelkamera eines eigenen optischen Designs bedarf.

Denn die Empfangsoptik sollte so ausgelegt sein, dass sich bei gegebener Folge der Fokuslagen $G_i$ der über den Zerstreuungskreisdurchmesser K=2σ definierte Tiefenschärfebereich (depth of field, DOF) nur über wenige $\Delta G = G_i - G_{i-1}$ erstreckt. Beispielsweise ist der Tiefenschärfenbereich höchstens vier-bis achtmal so groß wie $\Delta G$, wobei der Faktor mit $N_{DOF}$ bezeichnet sei. Daraus ergibt sich als Forderung an die Apertur D:

$$D = \frac{2K}{b} \cdot \frac{N}{N_{DOF}(G_{max} - G_{min})}.$$

Wegen der linear in 1/g beziehungsweise 1/z gewählten Fokuslagen und somit $\Delta G$=const. gilt diese Forderung identisch für alle Empfangsoptiken, die somit dieselbe Apertur und dasselbe optische Design aufweisen können, lediglich mit unterschiedlichem Abstand zum Bildsensor zur Einstellung der Fokuslagen.

Für $f \ll g_{min}$, was für die hier angesprochenen makroskopischen Anwendungen praktisch immer der Fall ist, folgt b = f. Der Zerstreuungskreisdurchmesser K entspricht der maximalen Unschärfe, die für die laterale Auflösung der Tiefenkarte zulässig ist. Im Falle einer aktiven Beleuchtung mit einem Punktmuster wäre dies der mittlere Abstand benachbarter Punkte.

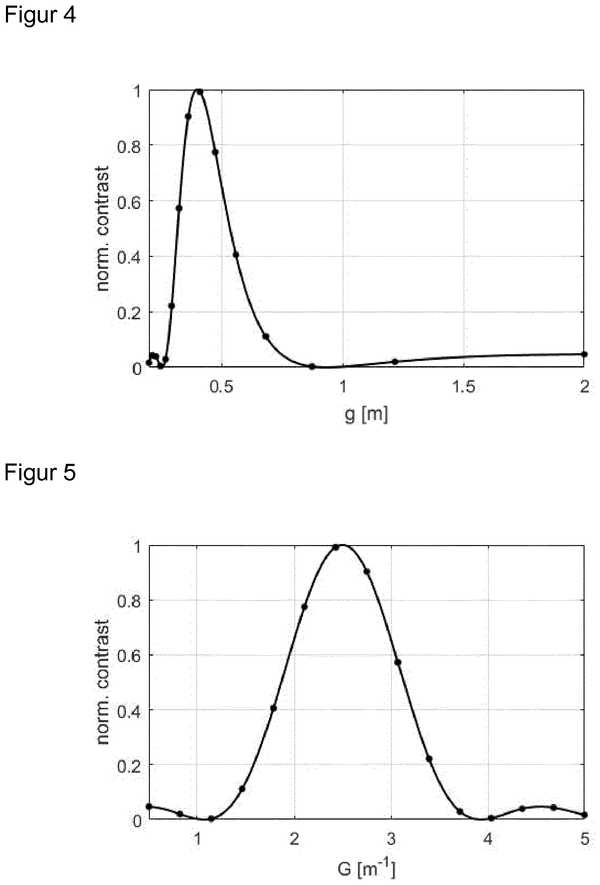

Die Figuren 4 und 5 sind beispielhafte idealisierte Kontrastkurven, wobei Figur 4 den Kontrast über die Fokuslage g und Figur 5 über deren Inverse G zeigt. Die Punkte entsprechen den diskreten Fokuslagen $g_i$ und damit den Messpunkten. Figur 5 zeigt die gleichmäßige Anordnung der Inversen der Fokuslagen. Die Anordnung der Kehrwerte und damit der Fokuslagen selbst wird, wie in Figur 4 zu sehen, zu nahen Abständen hin hyperbelartig dichter.

Die Kontrastkurve über g wie in Figur 4 ist stark gestaucht mit schnellen Oszillationen für kleine g. Dieselbe Kontrastkurve ist hingegen symmetrisch bei Darstellung über G wie in Figur 5, und damit zeigt sich nochmals, warum das Sampling linear in G=1/g optimal ist. Der Tiefenschärfebereich ist über den Abstand zwischen den beiden Tiefpunkten rechts und links des globalen Kontrastmaximums gegeben. Dessen Anteil an der Länge des Gesamtarbeitsbereiches wird über das Verhältnis $N_{DOF}$/N bestimmt, weshalb die Wahl von D die Form der Kontrastkurve und insbesondere deren Steilheit bestimmt. Die oben schon angesprochene vorteilhafte Vorgabe $N_{DOF} \approx 4...8$ führt zu einer Kontrastkurve, die für eine einfache Auswertung weder zu steil noch zu flach wird.

Die gleichmäßigen inversen Fokuslagen G haben den weiteren Vorteil, dass die Kontrastkurve wie in Figur 5 symmetrisch wird. Das erleichtert nämlich die Interpolation und verbessert deren Genauigkeit, da die Symmetrie Vorwissen für einen Funktionsfit darstellt. So kann beispielsweise ein Funktionsfit auf gerade Polynome beschränkt werden. Damit wird die Ordnung eines Funktionsfits bei gleicher Anzahl Koeffizienten um einen Faktor zwei verbessert.

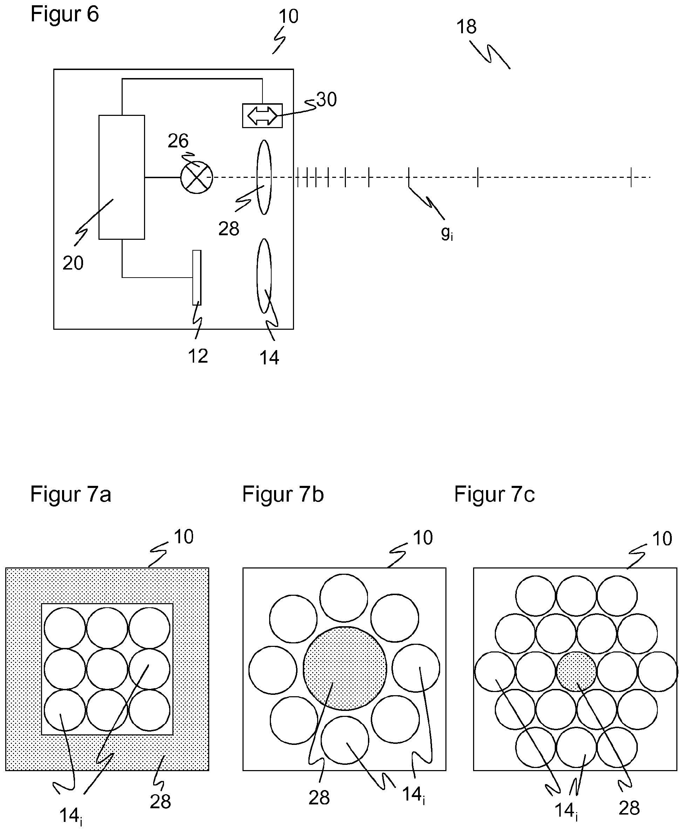

Figur 6 zeigt eine schematische Darstellung einer weiteren Ausführungsform des Sensors 10. Die bisher beschriebenen Systeme waren passiv, so wie dies herkömmlich bei DFF-Verfahren auch üblich ist. Der Sensor 10 gemäß Figur 6 ist nun ein aktives System mit einer Beleuchtungseinheit 26. Über eine Sendeoptik 28 wird ein strukturiertes Beleuchtungsmuster in den Überwachungsbereich 18 projiziert, insbesondere ein Punktmuster. Eine Fokusverstellung 30 variiert nun die Fokuslagen $g_i$ der Sendeoptik 28, so dass anschaulich gesprochen das Beleuchtungsmuster in verschiedenen Entfernungen scharf projiziert ist, und in jeder dieser Tiefenlagen des Beleuchtungsmusters wird jeweils eine Aufnahme der Bildserie erzeugt.

Das Prinzip mit sendeseitig variierten Fokuslagen $g_i$ funktioniert ganz analog zu empfangsseitig variierten Fokuslagen $g_i$ und wird daher nicht erneut beschrieben. Das gilt auch für die diversen erläuterten Ausführungsformen. Das Pendant zu einem Kameraarray ist dabei eine Mehrfachanordnung von Beleuchtungseinheiten, denen jeweils eine Sendeoptik mit eigener Fokuslage $g_i$ zugeordnet ist.

Auch mehreren sendeseitigen Fokuslagen $g_i$ ist aufgrund der Analogie eine gleichmäßige Anordnung in der Inversen optimal. Auch die Abschätzungen zur notwendigen Apertur mehrerer Sendeoptiken sind übertragbar und folglich bei Mehrfachanordnung von Beleuchtungseinheiten gleichartige Sendeoptiken vorteilhaft.

Um die Variation der Fokuslagen in einer Bildserie auf die Sendeseite zu beschränken, kann die Empfangsoptik 14 über dem gesamten Arbeitsbereich hyperfokal ausgelegt werden, d.h. der Tiefenschärfenbereich der Empfangsoptik 14 umfasst den ganzen Arbeitsbereich.

Vorzugsweise erfolgt die Bildaufnahme sequentiell, es wird also immer nur eine Tiefenebene durch Beleuchten mit einem Beleuchtungsmuster bei einer Fokuslage $g_i$ scharf gestellt. Im Falle einer Fokusverstellung wie in Figur 6 ist das technisch ohnehin nicht anders möglich, aber auch bei mehreren Beleuchtungseinheiten analog zu einem Kameraarray ist eine solche sequentielle Aktivierung vorteilhaft, weil sie den kontrastfreien, geblurrten Lichtanteil reduziert. Es ergibt sich dann eine verbesserte laterale Auflösung, da über die hyperfokale Empfangsoptik die Szenerie selbst nicht defokussiert dargestellt wird und Kanten scharf erhalten bleiben.

Alternativ können aber auch mehrere Beleuchtungseinheiten unterschiedlicher Wellenlängen parallel aktiviert und mehrere Bilder gleichzeitig aufgenommen werden. Empfangsseitig werden dann Farbfilter eingesetzt, um die Farbkanäle der mehreren Beleuchtungseinheiten zu trennen, und zwar entweder mit mehreren Einzelkameras eines Kameraarrays, die für jeweils eine Farbe zuständig sind, oder auch mittels eines gemeinsamen Bildsensors mit Farbfilter. Beispielsweise wird ein multispektrales Farbfilter mit 4x4 Farbkanälen anstelle eines RGB-Musters verwendet.

Um den Einfluss von Hintergrundlicht zu reduzieren, kann mit gepulster, quasimonochromatischer Beleuchtung und durch die Beleuchtung getriggerter Bildaufnahme gearbeitet werden. Auch sind geeignete Bandpassfilter vor der Empfangsoptik 14 beziehungsweise dem Bildsensor 12 denkbar.

Die Figuren 7a-c zeigen einige beispielhafte Anordnungen von Beleuchtungseinheiten und Einzelkameras, die vorzugsweise koaxial zueinander angeordnet sind. In einer Frontalansicht ähnlich Figur 2 sind jeweils nur die Aperturen der Empfangsoptiken 14 beziehungsweise grau schattiert der Sendeoptik 28 dargestellt. Die Beleuchtung ist vorzugsweise strukturiert wie beschrieben, kann aber auch lediglich eine homogene Beleuchtung sein, um den natürlichen Kontrast der Szenerie zu erhöhen.

Bisher wurden die Fokuslagen $g_i$ entweder sende- oder empfangsseitig erzeugt. Da sich die Blur-Anteile nach der vereinfachten Beschreibung mittels Gauss'scher Punktspreizfunktion im geometrischen Mittel sende- und empfangsseitig addieren, kann durch alternative beidseitige Variation der Fokuslage auf Sende- und Empfangsseite die Apertur um den Faktor $\sqrt{2}$ reduziert werden. Sendeoptik 28 und Empfangsoptik 14, im Falle mehrfarbiger Beleuchtung gegebenenfalls die einander zugehörigen, sind dann vorzugsweise simultan auf die gleiche Ebene scharf zu stellen.

Die Figuren 1 und 2 zeigen zwei Möglichkeiten zur Erzeugung verschiedener empfangsseitiger Fokuslagen durch Fokusverstellung 16 beziehungsweise durch ein Kameraarray. Eine weitere Möglichkeit ist der Einsatz einer chromatischen Linse oder Empfangsoptik 14. Das ist eine Empfangsoptik 14, die ganz gezielt einen chromatischen Fehler aufweist, und zwar derart, dass für bestimmte Farben die Fokuslagen $g_i$ entsprechend des beschriebenen Samplings mit gleichmäßiger Verteilung im Inversen entstehen. Die Selektion der Farbkanäle erfolgt entweder parallel auf dem Bildsensor 12 durch eine entsprechende Filtermatrix wie schon im Zusammenhang mit einer parallelen Mehrfachaufnahme bei mehrfarbiger Beleuchtung erwähnt, oder sequentiell durch Schalten der Farbe der Beleuchtung. Eine chromatische Empfangsoptik kann mit einer homogenen oder strukturierten Beleuchtung kombiniert werden.

## Patentansprüche

1. Verfahren zum Erzeugen von 3D-Bilddaten eines Überwachungsbereichs (18), bei dem mehrfach ein zweidimensionales Bild bei verschiedenen Fokuslagen ($g_i$) aufgenommen wird, wobei die unterschiedlichen Fokuslagen ($g_i$) diejenigen einer Empfangsoptik (14) und/oder einer Sendeoptik (28) zum Beleuchten des Überwachungsbereichs (18) mit einem Beleuchtungsmuster sind, wobei zu den Bildern jeweils ein Kontrastmaß je Pixelbereich des Bildes ermittelt und für den jeweiligen Pixelbereich eine Entfernung aus der Fokuslage bei einem höchsten Kontrastmaß bestimmt wird,
**dadurch gekennzeichnet,**
**dass** die Inversen ($G_i$) der verschiedenen Fokuslagen ($g_i$) gleichmäßig verteilt sind.

2. Verfahren nach Anspruch 1,
wobei eine Fokuslage höchsten Kontrasts zwischen den verschiedenen Fokuslagen ($g_i$) interpoliert wird.

3. Verfahren nach Anspruch 2,

wobei die Interpolation durch Funktionsfit mit einer symmetrischen Kontrastkurve erfolgt, insbesondere mit einem geraden Polynom.

4. Verfahren nach einem der vorhergehenden Ansprüche,
wobei zumindest einige der zweidimensionalen Bilder gleichzeitig aufgenommen werden.

5. Verfahren nach einem der vorhergehenden Ansprüche,
wobei zumindest einige der verschiedenen Fokuslagen ($g_i$) durch eine Fokusverstellung (16, 30) der Empfangsoptik und/oder der Sendeoptik eingestellt werden.

6. Verfahren nach einem der vorhergehenden Ansprüche,
wobei zumindest einige der zweidimensionalen Bilder durch mehrere Bildsensoren (12) mit jeweils auf unterschiedliche Fokuslage ($g_i$) eingestellter Empfangsoptik ($14_1...14_9$) aufgenommen werden.

7. Verfahren nach einem der vorhergehenden Ansprüche,
wobei zumindest einige der verschiedenen Fokuslagen ($g_i$) durch mehrere Beleuchtungsmuster mehrerer Beleuchtungseinheiten (26, 28) eingestellt werden.

8. Verfahren nach einem der vorhergehenden Ansprüche,
wobei zumindest einige der zweidimensionalen Bilder zugleich von demselben Bildsensor (12) aufgenommen und anhand ihrer Farben getrennt werden.

9. Verfahren nach einem der vorhergehenden Ansprüche,
wobei zumindest einige der verschiedenen Fokuslagen ($g_i$) durch eine chromatische Empfangsoptik (14) erzeugt werden.

10. Optoelektronischer Sensor (10), insbesondere 3D-Kamera, zum Erzeugen von 3D-Bilddaten eines Überwachungsbereichs (18), mit mindestens einem Bildsensor (12) und einer dem Bildsensor (12) zugeordneten Empfangsoptik (14) sowie einer Steuer- und Auswertungseinheit (20), die dafür ausgebildet ist, mehrfach ein zweidimensionales Bild bei verschiedenen Fokuslagen ($g_i$) aufzunehmen, zu den Bildern jeweils ein Kontrastmaß je Pixelbereich des Bildes zu ermitteln und für den jeweiligen Pixelbereich eine Entfernung aus der Fokuslage bei einem höchsten Kontrastmaß zu bestimmen,
**dadurch gekennzeichnet,**
**dass** die Inversen ($G_i$) der verschiedenen Fokuslagen ($g_i$) gleichmäßig verteilt sind.

11. Sensor nach Anspruch 10,
der mehrere Bildsensoren (12) mit auf unterschiedliche Fokuslagen eingestellten Empfangsoptiken ($14_1...14_9$) aufweist.

12. Sensor nach Anspruch 10 oder 11,
der mehrere Beleuchtungseinheiten (26, 28) mit jeweils einer auf unterschiedliche Fokuslagen ($g_i$) eingestellten Sendeoptik (28) zum Erzeugen eines Beleuchtungsmusters in dem Überwachungsbereich (18) aufweist.

13. Sensor nach Anspruch 11 oder 12,
wobei die Empfangsoptiken (14) und/oder die Sendeoptiken (28) bis auf die Einstellung der Fokuslage ($g_i$) untereinander gleichartig sind.

**Claims**

1. A method for generating 3D image data of a monitored area (18), wherein a two-dimensional image is repeatedly acquired at different focus positions ($g_i$), the different focus positions ($g_i$) being those of receiving optics (14) and/or transmission optics (28) for illuminating the monitored area (18) with an illumination pattern, wherein a measure of contrast per pixel area of the image is determined for the images and a distance for the respective pixel area is determined from the focus position at a maximum measure of contrast, **characterized in that** the inverse ($G_i$) of the different focus positions ($g_i$) are evenly distributed.

2. The method according to claim 1,
wherein a focus position of highest contrast is interpolated between the different focus positions ($g_i$).

3. The method according to claim 2,
wherein the interpolation is performed by a function fit with a symmetrical contrast curve, in particular with an even polynomial.

4. The method according to any of the preceding claims,
wherein at least some of the two-dimensional images are taken simultaneously.

5. The method according to any of the preceding claims,
wherein at least some of the different focus positions ($g_i$) are set by a focus adjustment (16, 30) of the receiving optics and/or the transmission optics.

6. The method according to any of the preceding claims,
wherein at least some of the two-dimensional images are acquired by a plurality of image sensors (12) each having receiving optics ($14_1...14_9$) set to different focal positions ($g_i$).

7. The method according to any of the preceding claims,
wherein at least some of the different focus positions ($g_i$) are set by a plurality of illumination patterns of a plurality of illumination units (26, 28).

8. The method according to any of the preceding claims,
wherein at least some of the two-dimensional images are acquired simultaneously by the same image sensor (12) and separated by their colors.

9. The method according to any of the preceding claims,
wherein at least some of the different focus positions ($g_i$) are generated by chromatic receiving optics (14).

10. An optoelectronic sensor (10), in particular a 3D camera, for generating 3D image data of a monitored area (18), the sensor (10) comprising at least one image sensor (12) and receiving optics (14) assigned to the image sensor (12), as well as a control and evaluation unit (20) configured to repeatedly take a two-dimensional image at different focus positions ($g_i$), to determine, for the images, a contrast measure for respective pixel areas of the image, and to determine a distance for the respective pixel area from the focus position at a maximum contrast measure, **characterized in that** the inverse ($G_i$) of the different focus positions ($g_i$) are evenly distributed.

11. The sensor according to claim 10,
having a plurality of image sensors (12) with receiving optics ($14_1...14_9$) set to different focus positions.

12. The sensor according to claim 10 or 11,
comprising a plurality of illumination units (26, 28), each having transmission optics (28) set to different focus positions ($g_i$), for generating an illumination pattern in the monitoring area (18).

13. The sensor according to claim 11 or 12,
wherein the receiving optics (14) and/or the transmission optics (28) are identical to one another except for the adjustment of the focus position ($g_i$).

**Revendications**

1. Procédé pour générer des données d'image 3D d'une zone à surveiller (18), dans lequel une image bidimensionnelle est prise plusieurs fois à différentes positions focales ($g_i$), les différentes positions focales ($g_i$) sont celles d'une optique de réception (14) et/ou d'une optique d'émission (28) pour éclairer la zone à surveiller (18) avec un motif d'éclairage, un niveau de contraste respectif par zone de pixel de l'image est déterminé pour chacune des images, et une distance est définie à partir de la position focale à un niveau de contraste maximal pour la zone de pixel respective,
**caractérisé en ce que** les inverses ($G_i$) des différentes positions focales ($g_i$) sont réparties de manière régulière.

2. Procédé selon la revendication 1,
dans lequel une position focale de contraste maximal est interpolée entre les différentes positions focales ($g_i$).

3. Procédé selon la revendication 2,
dans lequel l'interpolation est effectuée par ajustement de fonction avec une courbe de contraste symétrique, en particulier avec un polynôme droit.

4. Procédé selon l'une des revendications précédentes,
dans lequel au moins certaines des images bidimensionnelles sont prises simultanément.

5. Procédé selon l'une des revendications précédentes,
dans lequel au moins certaines des différentes positions focales ($g_i$) sont ajustées par un réglage focal (16, 30) de l'optique de réception et/ou de l'optique d'émission.

6. Procédé selon l'une des revendications précédentes,
dans lequel au moins certaines des images bidimensionnelles sont prises par plusieurs capteurs d'images (12) respectivement avec une optique de réception ($14_1 ... 14_9$) ajustée à une position focale ($g_i$) différente.

7. Procédé selon l'une des revendications précédentes,
dans lequel au moins certaines des positions focales ($g_i$) sont ajustées à travers plusieurs motifs d'éclairage de plusieurs unités d'éclairage (26, 28).

8. Procédé selon l'une des revendications précédentes,
dans lequel au moins certaines des images bidimensionnelles sont prises simultanément par le même capteur d'images (12) et sont séparées sur la base de leurs couleurs.

9. Procédé selon l'une des revendications précédentes,
dans lequel au moins certaines des différentes positions focales ($g_i$) sont générées par une optique de réception (14) chromatique.

**10.** Capteur optoélectronique (10), en particulier caméra 3D, pour générer des données d'image 3D d'une zone à surveiller (18), comportant au moins un capteur d'images (12) et une optique de réception (14) associée au capteur d'images (12) ainsi qu'une unité de commande et d'évaluation (20) réalisée pour prendre plusieurs fois une image bidimensionnelle à différentes positions focales ($g_i$), pour déterminer un niveau de contraste respectif par zone de pixel de l'image pour chacune des images, et pour définir une distance à partir de la position focale à un niveau de contraste maximal pour la zone de pixel respective,

**caractérisé en ce que**

les inverses ($G_i$) des différentes positions focales ($g_i$) sont réparties de manière régulière.

**11.** Capteur selon la revendication 10, comprenant plusieurs capteurs d'images (12) qui comportent des optiques de réception ($14_1$ ... $14_9$) ajustées à différentes positions focales.

**12.** Capteur selon la revendication 10 ou 11, comprenant plusieurs unités d'éclairage (26, 28) qui comportent chacune une optique d'émission (28) ajustée à différentes positions focales ($g_i$) pour générer un motif d'éclairage dans la zone à surveiller (18).

**13.** Capteur selon la revendication 11 ou 12, dans lequel les optiques de réception (14) et/ou les optiques d'émission (28) sont de type identique, exception faite de l'ajustement de la position focale ($g_i$).

**Figur 1**

**Figur 2**

**Figur 3**

Figur 4

Figur 5

Figur 6

Figur 7a

Figur 7b

Figur 7c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2701380 B1

- US 9215357 B2

**In der Beschreibung aufgeführte Nicht-Patentliteratur**

- **VON NAYAR ; SHREE K. ; MASAHIRO WATANABE ; MINORI NOGUCHI.** Real-time focus range sensor. *IEEE Transactions on Pattern Analysis and Machine Intelligence,* 1996, vol. 18.12, 1186-1198

- The optimal axial interval in estimating depth from defocus. **SCHECHNER, YOAV Y. ; NAHUM KIRY-ATI.** Proceedings of the Seventh IEEE International Conference on Computer Vision. IEEE, 1999, vol. 2